(19) Europäisches Patentamt European Patent Office Office européen des brevets

(11) **EP 4 318 733 B1**

(12) **EUROPEAN PATENT SPECIFICATION**

(45) Date of publication and mention of the grant of the patent:
**03.06.2026 Bulletin 2026/23**

(21) Application number: **22781565.1**

(22) Date of filing: **29.03.2022**

(51) International Patent Classification (IPC):
***B03B 9/00*** *(2006.01)* ***B03B 9/06*** *(2006.01)*
***B02C 23/18*** *(2006.01)* ***H01M 6/52*** *(2006.01)*

(52) Cooperative Patent Classification (CPC):
**H01M 10/54; B02C 23/24; B03B 9/00; C22B 7/005;**
**H01M 6/52; H01M 10/052;** B02C 23/18;
B03B 2009/066; Y02W 30/84

(86) International application number:
**PCT/KR2022/004402**

(87) International publication number:
**WO 2022/211446 (06.10.2022 Gazette 2022/40)**

(54) **PROCESSING METHOD FOR REUSING WASTE BATTERY**

VERARBEITUNGSVERFAHREN ZUR WIEDERVERWENDUNG EINER ABFALLBATTERIE

PROCÉDÉ DE TRAITEMENT PERMETTANT DE RÉUTILISER UNE BATTERIE USAGÉE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **29.03.2021 KR 20210040649**
**18.03.2022 KR 20220033750**

(43) Date of publication of application:
**07.02.2024 Bulletin 2024/06**

(73) Proprietors:
• **POSCO Co., Ltd**
**Pohang-si, Gyeongsangbuk-do 37859 (KR)**
• **POSCO Holdings Inc.**
**Seoul 06194 (KR)**

(72) Inventors:
• **HAN, Sang Woo**
**Seoul 06194 (KR)**
• **KIM, Wan-Yi**
**Seoul 06194 (KR)**
• **YOON, Sanghyeon**
**Pohang-si, Gyeongsangbuk-do 37859 (KR)**
• **CHO, Hyunjin**
**Pohang-si, Gyeongsangbuk-do 37859 (KR)**
• **JUNG, Sungsuk**
**Pohang-si, Gyeongsangbuk-do 37859 (KR)**

(74) Representative: **Pfenning, Meinig & Partner mbB**
**Patent- und Rechtsanwälte**
**Theresienhöhe 11a**
**80339 München (DE)**

(56) References cited:
CN-A- 109 560 342    JP-A- 2000 106 221
JP-A- 2000 106 221    JP-A- 2012 195 073
JP-A- 2015 092 465    JP-A- H11 167 936
JP-A- H11 167 936    KR-A- 20030 024 430

**Description**

**[Technical Field]**

The present invention relates to a waste battery and provides a processing method for reusing a waste battery.

**[Background Art]**

Lithium secondary batteries have been used in a very wide range of fields, from small electronic devices to automobiles, and their use has gradually expanded.

These lithium secondary batteries have a reduced charging capacity after being used for as little as 5 to as long as 10 years, and may no longer be used. As a result, the problem of disposing of batteries that may no longer be used is a social issue in many countries around the world. Processing methods for recycling waste battery are described in JP2000106221A, CN109560342A abd JPH11167936A.

Lithium secondary batteries generally a positive electrode and a negative electrode including Ni, Co, Mn, etc., together with lithium (Li) and an electrolyte including a non-aqueous organic solvent. The organic solvent may cause fire, and Li, Ni, Co, Mn, etc. included in the positive electrode are expensive elements, so research has been actively conducted to reuse them from a waste battery.

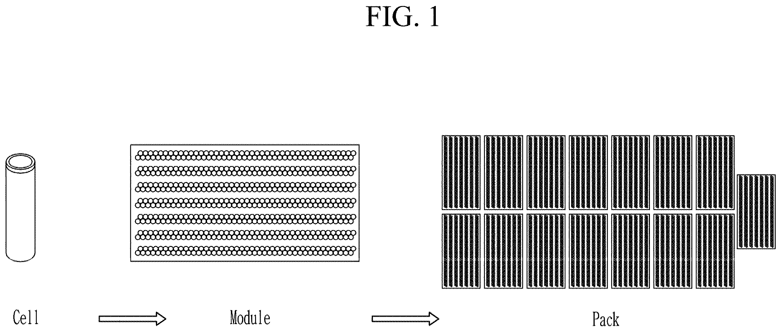

In particular, in the fields of using these lithium secondary batteries electric vehicles has been increasingly prevalent, and as these electric vehicles require high power, a battery pack form (FIG. 1) in which one or more battery modules of 20V to 60V including one or more unit cells of 2V to 4V connected in series/parallel are connected in series has been used, and thus, research on the reuse of Li, Ni, Co, Mn, etc. from such battery packs has come to prominence.

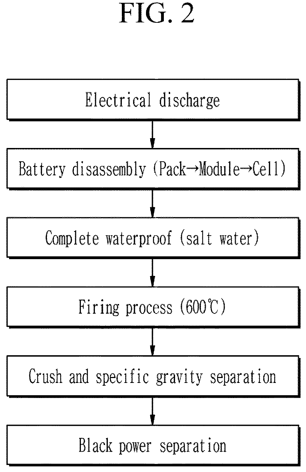

In order to reuse lithium secondary batteries, the batteries should be disassembled, but disassembly, that is, breaking of the batteries at the pack or module unit may cause a fire. Therefore, in order to prevent this, as shown in FIG. 2, batteries are disassembled by a method of electrically discharging the batteries, physically disassembling battery packs into lower units of modules or cells, performing complete discharging in salt water, and then, performing firing, crushing, and a specific gravity separation to obtain black powder, which is a mixture of positive and negative electrode material powders. However, this method has the problem of environmental pollution as hydrogen ions of an electrolyte solvent and ions of an electrolyte salt, for example, fluorine ions, combine during salt water discharge to cause hydrogen fluoride (HF), a harmful gas, and after salt water discharge, wastewater including discharged chlorine ions may also cause water pollution.

In addition, in the case of a pack battery, this process takes 8 hours per pack for electrical discharge, 1 to 2 hours on average for physical disassembling, about 24 hours for saline discharge, and about 1 hour for crushing and specific gravity separation processes, and thus, the entire process takes so much time and is not appropriate for practical application.

Therefore, there is a need for a method of disassembling batteries, especially, battery packs in pack units, more easily.

**[Disclosure]**

**[Technical Problem]**

According to an exemplary embodiment of the present invention, a processing method for reusing a waste battery to stably crush battery packs in a simple process without explosion or fire.

**[Technical Solution]**

A battery processing method according to an exemplary embodiment of the present invention may include: cooling and freezing a battery pack including a battery including a plurality of lithium ions as a unit cell for a minimum cooling time or more that satisfies Equation 1 below; and crushing the frozen battery pack.

<Equation 1>

$$\text{Minimum cooling time} = A \times W^{0.33}$$

($A = 4 \times e^{(-0.02 \times dT)}$, W = battery weight (Kg), dT= | external cooling temperature - target temperature | , and | | denotes an absolute value)

In an exemplary embodiment, the freezing may be performed by cooling to -150 °C to -60 °C. In an exemplary embodiment, the freezing may be performed by cooling to -60 °C to -20 °C, and the crushing may be performed under conditions of supplying inert gas, carbon dioxide, nitrogen, water, or combinations thereof.

In an exemplary embodiment, the freezing may be performed by cooling to -60 °C to -20 °C, and the crushing may be performed under vacuum atmosphere conditions of 100 torr or less. In an exemplary embodiment, the crushing may be performed until a maximum size of a crushed product is 10 mm or less.

In an exemplary embodiment, the battery processing method may further include: performing a magnetic separation or a specific gravity separation to separate products having a maximum size of 1 mm or less, after the crushing. In an exemplary embodiment, the battery processing method may further include: compressing the frozen battery pack, after the freezing and before the crushing. the compressing may be performed so that a thickness of the battery pack is less than 1/2 of a thickness of the battery pack before freezing.

A battery processing method according to an exemplary embodiment of the present invention may include: crushing a battery pack, while cooling and freezing the battery pack including a battery including a plurality of lithium ions as a unit cell for a minimum cooling time or more that satisfies Equation 1 below.

<Equation 1>

$$\text{Minimum cooling time} = A \times W^{0.33}$$

(A = $4 \times e^{(-0.02 \times dT)}$, W = battery weight(Kg), dT= | external cooling temperature - target temperature | , and | | denotes an absolute value)

In an exemplary embodiment, the freezing may be performed by cooling to -150 °C to -60 °C. In an exemplary embodiment, the freezing may be performed by cooling to -60 °C to -20 °C, and the crushing may be performed under conditions of supplying inert gas, carbon dioxide, nitrogen, water, or combinations thereof.

In an exemplary embodiment, the freezing may be performed by cooling to -60 °C to -20 °C, and the crushing is performed under vacuum atmosphere conditions of 100 torr or less.

In an exemplary embodiment, the crushing may be performed until a maximum size of a crushed product is 10 mm or less. In an exemplary embodiment, the battery processing method may further include: performing a magnetic separation or a specific gravity separation to separate products having a maximum size of 1 mm or less, after the crushing.

[Advantageous Effects]

The processing method for reusing a waste battery according to an exemplary embodiment of the present invention may process a waste battery within a short time using a simple process without the risk of explosion or fire when crushing batteries, through the relationship between a minimum holding time in a refrigerator according to the weight of the batteries.

[Description of the Drawings]

FIG. 1 is a schematic diagram briefly illustrating a structure of a unit cell, module, and battery pack.
FIG. 2 is a process diagram schematically illustrating a processing process of a waste battery of the related art.

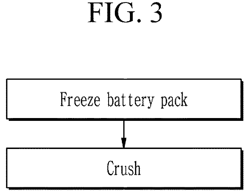

FIG. 3 is a schematic diagram schematically illustrating a processing method for reusing a waste battery according to an exemplary embodiment.
FIG. 4 is a graph of a voltage change according to performing a freezing process of a frozen battery pack according to Example 1.
FIG. 5 is a photograph of a product crushed according to Example 1.
FIG. 6 is a photograph of ignition during a crushing process of Comparative Example 1.
FIG. 7 is a graph of a minimum cooling time, according to an exemplary embodiment of the present invention.
FIGS. 8A and 8B are photographs of Example according to a minimum cooling time of the present invention, and FIGS. 8C and 8D are photographs of Comparative Example according to a minimum cooling time of the present invention.

[Mode for Invention]

Here, terminologies used herein are merely used to describe a specific exemplary embodiment, and are not intended to limit the present invention. A singular form used herein includes a plural form as long as phrases do not express a clearly opposite meaning. The term "include" used in the specification specifies specific characteristics, a specific area, a specific integer, a specific step, a specific operation, a specific element, and/or a specific ingredient, and does not exclude existence or addition of the other characteristics, the other area, the other integer, the other step, the other operation, the other element, and/or the other ingredient.

When it is mentioned that a first component is located "above" or "on" a second component, the first component may be located directly "above" or "on" the second component or a third component may be interposed therebetween. In contrast, when it is mentioned that a first component is located "directly above" a second component, a third component is not interposed therebetween.

Although not otherwise defined, all terms used herein, including technical terms and scientific terms, have the same meanings as those generally understood by those skilled in the art to which the present invention pertains. Terms defined in a generally used dictionary are interpreted as meanings according with related technical documents and currently disclosed contents, and are not interpreted as ideal meanings or very formal meanings unless otherwise defined.

Hereinafter, an exemplary embodiment of the present invention is described in detail. However, the exemplary embodiment is presented as an example and the present invention is not limited thereby, and the present invention is only defined by the scope of the claims to be described below.

A processing method for reusing a waste battery according to an exemplary embodiment includes cooling and freezing a battery pack including a battery including a plurality of lithium ions as a unit cell for a minimum cooling time or more and crushing the frozen battery pack. The battery including lithium ions may include various types of batteries including lithium ions, for example, a lithium secondary battery separated from automobiles, a secondary battery separated from electronic devices, such as mobile phones, cameras, and laptops, specifically, a lithium secondary battery.

In the processing method for reusing a waste battery, in cooling and freezing a battery pack including a battery including a plurality of lithium ions as a unit cell for a minimum cooling time or more, the minimum cooling time may satisfy Equation 1 below and the battery pack may be cooled beyond the value of Equation 1 below to be frozen.

<Equation 1>

$$\text{Minimum cooling time} = A \times W^{0.33}$$

($A = 4 \times e^{(-0.02 \times dT)}$, W = battery pack weight(Kg), dT = | external cooling temperature - target temperature |, and | | denotes an absolute value)

The minimum cooling time in Equation 1 refers to the weight of the battery pack, specifically, the weight of a battery, the external cooling temperature, which is a cooling temperature applied to the battery pack for cooling the battery pack, and a target temperature for cooling the battery pack, specifically, even an electrolyte in the battery pack. In the freezing of the battery pack, even an electrolyte inside the battery pack may be cooled by performing the minimum cooling time or more, thereby advantageously performing a follow-up process stably. In the freezing of the battery pack, if the battery pack is frozen for a time less than the minimum cooling time, the electrolyte may not be cooled and a risk of fire may occur during crushing.

According to an exemplary embodiment, the freezing process may be performed at a temperature sufficient to freeze the electrolyte, for example, by cooling to -150 °C (minus 150 °C) to -60 °C (minus 60 °C). When the battery pack is cooled to the above temperature range, a voltage remaining slightly inside the battery, for example, about 2V to 3V, may decrease close to 0V, as shown in FIG. 2, and even if a contact short circuit occurs in which a positive electrode and a negative electrode are directly connected, a battery reaction may not occur, so a battery temperature may not increase and gas occurrence and combustion of the electrolyte may not occur. In addition, since the electrolyte is in a frozen state, the mobility of lithium ions is very low, so current conduction characteristics due to lithium ion mobility may be significantly reduced, and since evaporation of the electrolyte does not occur, flammable gases, such as ethylene, propylene, and hydrogen may not occur.

If the freezing process is outside the above temperature range, for example, when cooling to a temperature higher than -60 °C, the voltage remaining inside the battery may not decrease to 0V and a battery reaction due to short circuits may occur, and the electrolyte may not be completely frozen, which, thus is not appropriate. In addition, when cooled to -150 °C, the electrolyte is sufficiently frozen and the internal voltage of the battery also decreases to 0V, so there is no need to lower the temperature to a lower temperature than this.

In another exemplary embodiment, the freezing process may be performed by cooling to a temperature that may suppress evaporation of the electrolyte, for example, -60 °C (minus 60 °C) to -20 °C (minus 20 °C).

When the freezing process is performed by cooling to -60 °C (minus 60 °C) to -20 °C (minus 20 °C), the crushing process may be performed under a condition of supplying inert gas, carbon dioxide, nitrogen, water, or combinations thereof, under a vacuum atmosphere condition of 100 torr or less.

The inert gas may be argon gas, helium gas, or a mixture thereof. The pressure of the vacuum atmosphere may be 100 torr or less, 0.00001 ($10^{-5}$) torr to 100 torr.

In this manner, since the freezing process is performed at a somewhat higher temperature of -60 °C to -20 °C, the crushing process is performed by supplying inert gas, carbon dioxide, nitrogen, water, or combinations thereof or adjusting to a vacuum atmosphere with a pressure of 100 torr or less, the supply of oxygen may be suppressed, so that it is possible to prevent the electrolyte from reacting with oxygen, thereby preventing an explosion, and the evaporation of the electrolyte may be suppressed not to cause flammable gas, such as ethylene, propylene, hydrogen, etc.

When the freezing process is performed at -60 °C to -20 °C in an air atmosphere or at a pressure exceeding 100 torr, voltage may remain within the battery pack, and since the electrolyte is not frozen, the electrolyte may be vaporized by sparks occurring when short-circuits occur due to the remaining voltage, leading to an explosion, which, thus, is not appropriate.

As such, the processing method for reusing a waste battery includes freezing battery packs including batteries, such as lithium secondary batteries, before crushing them, thereby ensuring safety from the risk of fire that may occur during the process of crushing the battery pack.

The crushing of the frozen battery pack may refer to a process of applying shock or pressure to the battery pack so that a portion of the battery pack falls off. The crushing of the frozen battery pack according to an exemplary embodiment may refer to a process of crushing the battery pack, a process of cutting, a process of compressing, and combinations thereof. Specifically, the crushing process may refer to any process in which the battery pack is broken to be obtained as having a small size.

The crushing of the frozen battery pack according to an exemplary embodiment may include all processes of compressing the frozen battery pack or breaking the battery pack by applying an external force, such as shear force or tensile force. For example, the crushing may be performed using a crusher.

As such, in the processing method according to an exemplary embodiment, the process of crushing the battery pack itself is performed without physically disassembling the battery pack into modules and unit cells, the process is simple, and since a large amount of batteries is frozen at once during the freezing process, a waste battery may be processed within a short period of time to be reused. In addition, even in the case of an electric vehicle that uses a battery pack as an energy source, the battery pack may be separated from the vehicle and the processing method according to an exemplary embodiment may be applied, so that the battery pack may be processed safely through a simple process.

In general, when the battery pack is directly crushed, an explosion or fire may occur due to the electrolyte included therein. In particular, when a certain pressure is applied to the battery pack, a separator may be physically crushed, causing a short circuit to form a high current and spark, and this spark may ignite the electrolyte and cause a fire.

In an exemplary embodiment, the battery pack is frozen to suppress ignition of the liquid electrolyte included in the battery pack, and then the crushing process is performed, so that problems due to electrolyte ignition do not occur.

The crushing process may be performed until a maximum size of a crushed product is 10 mm or less, for example, 0.1 mm to 10 mm. When the crushing process is performed under these conditions, separation processes, such as a magnetic separation or a specific gravity separation, may be effectively applied to the crushed product, and thus, powder in which a positive electrode material of a positive electrode active material and a positive current collector and a negative electrode material of a negative electrode active material and a negative current collector are mixed, for example, black powder, may be more easily obtained. In addition, when the crushing process is performed under these conditions, the electrolyte may be more easily removed from the crushed product.

The crushing process may be performed at least once. Specifically, the crushing process may be performed continuously or discontinuously at least once.

Since the crushed product is at room temperature, the electrolyte also changes to a liquid state as the temperature increases, but the electrode ions in the positive electrode and negative electrode materials included in the crushed product are in equilibrium to the extent that a short circuit does not occur from the moment of crushing, so that when the electrolyte temperature reaches room temperature, the crushed product may be stabilized.

In an exemplary embodiment, after the freezing and before the crushing, a process of compressing the frozen battery pack may be further performed. The compression process may be performed so that a thickness of the battery pack is a thickness of 1/2 or less of the thickness of the battery pack before freezing, for example, 1/50 to 1/2. When the compression process is further performed, the crushing process may be performed more uniformly. For example, it may be supplied consistently and without deviation into the crusher used during the crushing process.

If the compression process is performed so that the thickness exceeds 1/2 of the thickness of the battery pack before freezing, it may be difficult to create a constant shape, which may cause a problem of lengthening the crushing process time.

Subsequently, separating products having a maximum size of 1 mm or less from the crushed product may be further performed. The separating may be performed as a magnetic selection or a specific gravity selection, and any selection process widely known in the art may be used. In this manner, as the separation is further performed, powder including a mixture of the positive electrode active material, the negative electrode active material, the positive current collector, and the negative current collector may be obtained. In addition, in an exemplary embodiment, after performing the crushing process, a process of removing and separating the electrolyte may be performed. In the electrolyte removal process, the electrolyte may be removed by heat-treating or vacuum drying the crushed product.

In the processing method according to another exemplary embodiment, the freezing and crushing processes may be performed together. Specifically, the processing method may include crushing the battery pack, while freezing the battery pack including batteries including a plurality of lithium ions as a unit cell. In this case, in the freezing, the frozen state for a minimum cooling time that satisfies Equation 1 below or longer may be maintained, and thereafter, the frozen state may be continuously maintained and the crushing process may be performed simultaneously.

<Equation 1>

$$\text{Minimum cooling time} = A \times W^{0.33}$$

($A = 4 \times e^{(-0.02 \times dT)}$, W = battery weight(Kg), dT= | external cooling temperature - target temperature | , and | | denotes an absolute value)

By performing the freezing and crushing processes simultaneously, the process may be simplified and economic advantages may be secured.

In an exemplary embodiment, the freezing may be performed by cooling to -150 °C to -60 °C. In addition, in the processing method, the crushing process may be performed under conditions of supplying inert gas, carbon dioxide, nitrogen, water, or combinations thereof, while freezing the battery pack at -60 °C to -20 °C, or the crushing process may be performed under vacuum conditions of 100 torr or less, while freezing the battery pack at -60 °C to -20 °C. The detailed description thereof is the same as the aforementioned contents to the extent that it is not contradictory.

In an exemplary embodiment, after the crushing while freezing, a magnetic separation or a specific gravity separation of separating products having a maximum size of 1 mm or less may be further performed. Contents on the freezing and crushing process may refer to the aforementioned contents to the extent that it is not contradictory.

Hereinafter, Example and Comparative Examples of the present invention will be described. However, the following Example is only an example of the present invention, and the present invention is not limited to the Example below.

<Example 1>

A battery pack including a unit cell including a positive electrode including $LiNi_{0.6}Co_{0.2}Mn_{0.2}O_2$ positive electrode active material, a negative electrode including artificial graphite negative electrode active material, and an electrolyte was frozen at -80 °C. The electrolyte used was a mixed solvent of dimethyl carbonate in which 1.0M $LiPF_6$ was dissolved and diethyl carbonate (50:50 volume ratio).

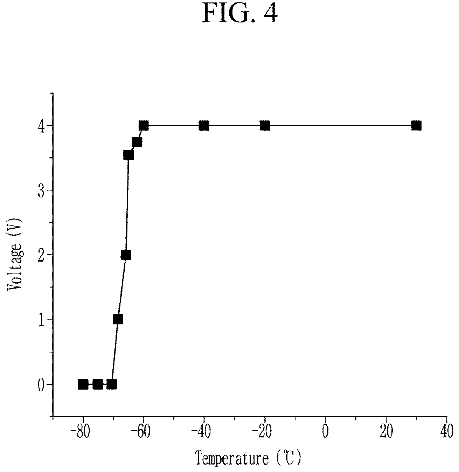

The results of measuring a battery voltage while the battery pack was frozen at -80 °C are shown in FIG. 4. As shown in FIG. 4, the battery pack shows almost the same voltage up to a high temperature of about 40 °C, room temperature, and -60 °C, so it can be seen that the battery characteristics are not lost. Subsequently, when the temperature decreased from -60 °C to -70 °C, the voltage decreased rapidly, and the result was obtained that the voltage was 0 below -70 °C, and thus, it can be seen that, a short circuit will not occur when the battery pack is frozen at -60°C to -150°C.

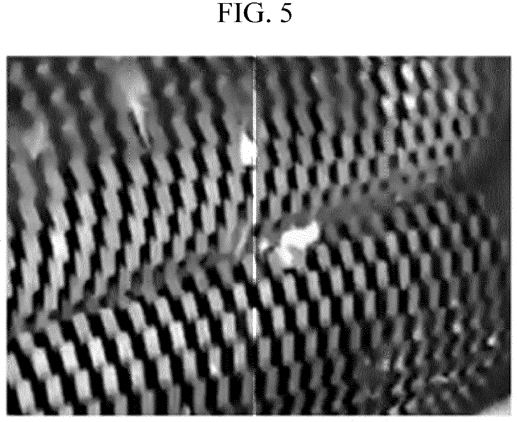

The frozen battery pack was crushed using a shear crusher. The crushing process was performed so that a maximum size of the crushed product was 10 mm or less. A photograph of the crushed product is shown in FIG. 5.

The crushed product was subjected to a specific gravity separation to obtain a product having a maximum size of 1 mm or less.

<Comparative Example 1>

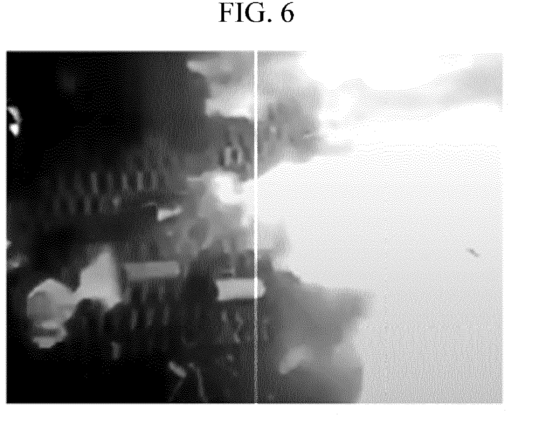

The battery pack used in Example 1 was crushed using the same crusher as that of Example 1 without freezing. As shown in FIG. 6, during the crushing process, flames occurred due to a short circuit.

In this way, through Example 1 and Comparative Example 1, it can be seen that, by including the freezing of the battery pack including the battery before crushing the battery, no short circuit occurs and no flame occurs in the battery crushing so that stability is excellent.

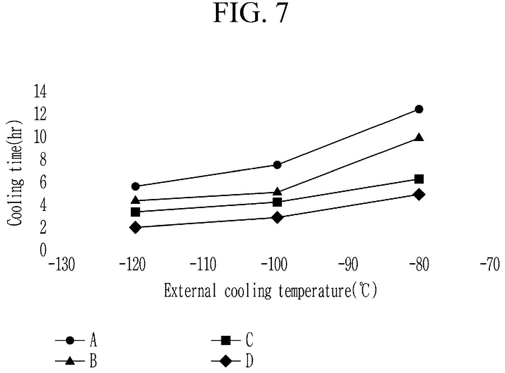

FIG. 7 is a graph of a minimum cooling time, according to an exemplary embodiment of the present invention.

Referring to FIG. 7, it can be seen that, in the battery processing method according to an exemplary embodiment of the present invention, the minimum cooling time for cooling the battery may be derived in the freezing of the battery pack. Specifically, it can be seen that the minimum cooling time is related to a battery weight, an external cooling temperature, and a target temperature.

FIG. 7 shows an external cooling temperature and a minimum cooling time when the target temperature is set to -70 °C and the battery weights are 2.5 kg (A), 10 kg (B), 20 kg (C), and 50 kg (D), respectively. When cooling the battery, the electrolyte of the battery starts to cool after a predetermined period of time and the voltage becomes 0. Through this, it can be seen that, when cooling the battery, a minimum holding time is required to sufficiently cool the interior, specifically, the electrolyte.

Specifically, in a heat transfer situation for cooling where heat is lost to the outside, it can be seen that, when considering specific heat of the battery itself, the weight of the battery and time for cooling are necessary. Even in a heat transfer situation for cooling where heat is lost to the outside, it can be seen that, considering the specific heat of the battery itself, the weight of the battery and time for cooling are necessary.

As such, in the present invention, in order to cool the battery, the minimum time required for cooling may be confirmed by using the external cooling temperature for freezing, the target temperature, and the weight of the battery.

Table 1 below lists the minimum cooling time according to battery weight and external cooling temperature.

(Table 1)

|  | Battery weight [Kg] | External cooling temperatur e[°C] | Target temper ature [°C] | Equa tion 1 | Minimu m cooling time [h] |
|---|---|---|---|---|---|
| A_1 | 2.5 | -120 | -70 | 1.9 | 1.9 |
| A_2 | 2.5 | -100 | -70 | 2.9 | 2.9 |
| A_3 | 2.5 | -80 | -70 | 4.4 | 4.4 |
| B_1 | 10 | -120 | -70 | 3.1 | 3.1 |
| B_2 | 10 | -100 | -70 | 4.6 | 4.6 |
| B_3 | 10 | -80 | -70 | 7.0 | 7.0 |
| C_1 | 20 | -120 | -70 | 3.9 | 3.9 |
| C_2 | 20 | -100 | -70 | 5.8 | 5.8 |
| C_3 | 20 | -80 | -70 | 8.8 | 8.8 |
| D_1 | 50 | -120 | -70 | 5.3 | 5.3 |
| D_2 | 50 | -100 | -70 | 7.9 | 7.9 |
| D_3 | 50 | -80 | -70 | 11.9 | 11.9 |

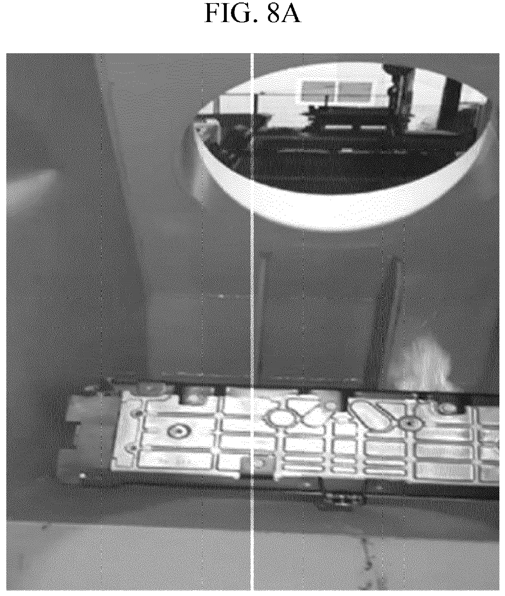

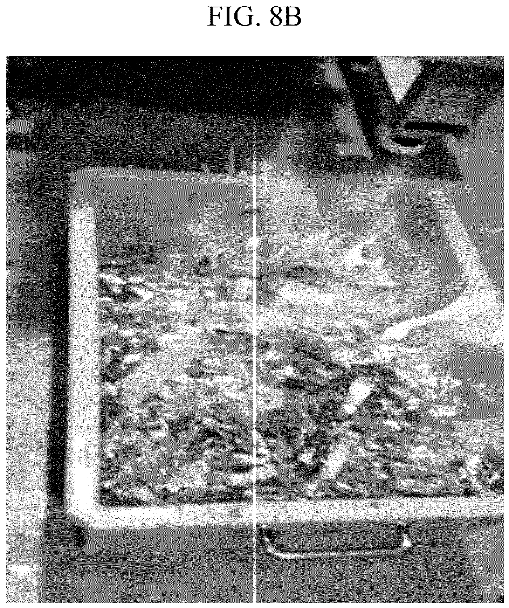

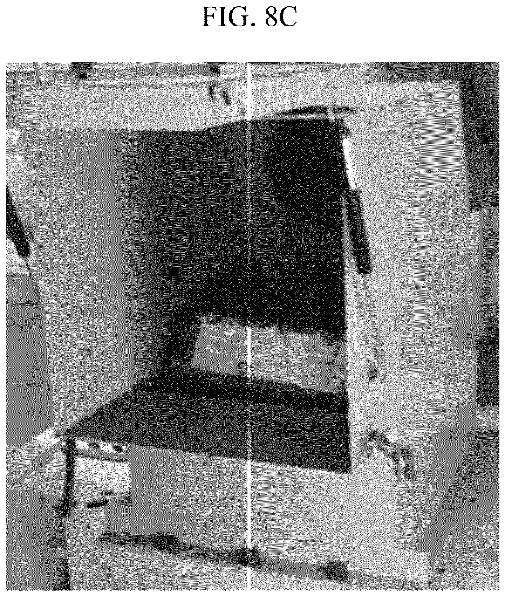

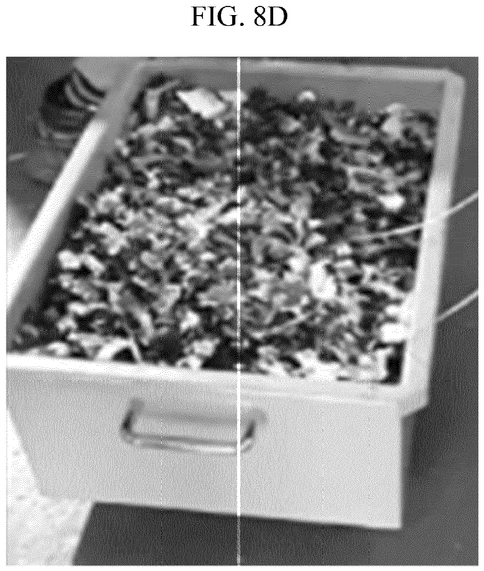

Referring to Table 1 above, it can be seen that as the battery weight decreases, the minimum cooling time for the battery to be cooled decreases. In addition, it can be seen that when the value of Equation 1 derived from the relational expression according to the battery weight, external cooling temperature, and target temperature is cooled to the minimum cooling time, the battery, specifically, even the electrolyte of the battery, is cooled. In addition, when the battery is cooled for a time of the value of Equation 1 above or more, a fire does not occur during the battery crushing process, which is a post-process. FIGS. 8A and 8B are photographs of Example according to the minimum cooling time of the present invention, and FIGS. 8C and 8D are photographs of Comparative Example according to the minimum cooling time of the present invention.

Referring to FIGS. 8A and 8B, an experiment was conducted on the fire occurrence of crushed material when the battery was frozen for a time less than the required minimum cooling time, in cooling the battery. In the above experiment, when the battery weight was 25 kg, the external cooling temperature was -95 °C, and the target freezing temperature was -70 °C, the experiment was conducted for 5 hours, which was less than the value in Equation 1 below when the value in Equation 1 was 7 hours.

<Equation 1>

$$\text{Minimum cooling time} = A \times W^{0.33}$$

(A $= 4 \times e^{(-0.02 \times dT)}$, W = battery pack weight(Kg), dT= | external cooling temperature - target temperature | , and | | denotes an absolute value)

Referring to FIGS. 8C and 8D, an experiment was conducted on the fire occurrence of a crushed material when the battery was frozen beyond the minimum freezing time required for cooling. The above experiment was conducted under the same battery weight, the same external cooling temperature as those in FIGS. 8A and 8B, and the minimum freezing time was set to 7 hours or more.

Table 2 below compares the fire occurrence states of Example and Comparative Examples according to FIGS. 8A to 8D, with the same battery weight, external cooling temperature, and minimum freezing time. The determination of the fire occurrence state was "O" if fire occurrence was observed after the battery was crushed, and "X" otherwise.

(Table 2)

|  | Battery weight [Kg] | External cooling temperature [°C] | Target temperatu re [°C] | Equation 1 | Actual cooling time [h] | Occurren ce of fire |
|---|---|---|---|---|---|---|
| Comparat ive Example 2 | 25 | - 95 | - 70 | 7.0 | 5 | O |
| Example 2 | 25 | - 95 | - 70 | 7.0 | 7 | X |

Referring to Table 2 above, it can be seen that when the battery is cooled to a value smaller than the value in Equation 1 corresponding to the minimum cooling time, the electrolyte is not cooled and a fire occurs after the battery is crushed. In this manner, it can be seen that when the battery is cooled by setting the value of Equation 1 as the minimum cooling time, the crushed material may be stably used without a fire after the battery is crushed. The present invention is not limited to the exemplary embodiments, but may be manufactured in a variety of different forms, and a person skilled in the art to which the present invention pertains may understand that the present invention may be implemented in other specific forms, without changing the technical idea or essential features of the present invention. Therefore, it should be understood that the exemplary embodiments described above are exemplary in all respects and not restrictive.

**Claims**

1.   A battery processing method comprising:

cooling and freezing a battery pack including a battery including a plurality of lithium ions as a unit cell for a minimum cooling time or more that satisfies Equation 1 below; and
crushing the frozen battery pack.

<Equation 1>

Minimum cooling time = $A \times W^{0.33}$

($A = 4 \times e^{(-0.02 \times dT)}$, W = battery weight (Kg), dT= | external cooling temperature - target temperature | , and | | denotes an absolute value)

2.   The battery processing method of claim 1, wherein:
the freezing is performed by cooling to -150 °C to -60 °C.

3.   The battery processing method of claim 1, wherein:

the freezing is performed by cooling to -60 °C to -20 °C, and
the crushing is performed under conditions of supplying inert gas, carbon dioxide, nitrogen, water, or combinations thereof.

4.   The battery processing method of claim 1, wherein:

the freezing is performed by cooling to -60 °C to -20 °C, and
the crushing is performed under vacuum atmosphere conditions of 100 torr or less.

5.   The battery processing method of claim 1, wherein:
the crushing is performed until a maximum size of a crushed product is 10 mm or less.

**6.** The battery processing method of claim 1, further comprising:
performing a magnetic separation or a specific gravity separation to separate products having a maximum size of 1 mm or less, after the crushing.

**7.** The battery processing method of claim 1, further comprising:
compressing the frozen battery pack, after the freezing and before the crushing.

**8.** The battery processing method of claim 7, wherein:
the compressing is performed so that a thickness of the battery pack is less than 1/2 of a thickness of the battery pack before freezing.

**9.** A battery processing method comprising:

crushing a battery pack, while cooling and freezing the battery pack including a battery including a plurality of lithium ions as a unit cell for a minimum cooling time or more that satisfies Equation 1 below.

<Equation 1>

$$\text{Minimum cooling time} = A \times W^{0.33}$$

($A = 4 \times e^{(-0.02 \times dT)}$), W = battery weight(Kg), dT= | external cooling temperature - target temperature | , and | | denotes an absolute value)

**10.** The battery processing method of claim 9, wherein:
the freezing is performed by cooling to -150 °C to -60 °C.

**11.** The battery processing method of claim 9, wherein:

the freezing is performed by cooling to -60 °C to -20 °C, and
the crushing is performed under conditions of supplying inert gas, carbon dioxide, nitrogen, water, or combinations thereof.

**12.** The battery processing method of claim 9, wherein:

the freezing is performed by cooling to -60 °C to -20 °C, and
the crushing is performed under vacuum atmosphere conditions of 100 torr or less.

**13.** The battery processing method of claim 9, wherein:
the crushing is performed until a maximum size of a crushed product is 10 mm or less.

**14.** The battery processing method of claim 9, further comprising:
performing a magnetic separation or a specific gravity separation to separate products having a maximum size of 1 mm or less, after the crushing.

**Patentansprüche**

**1.** Verfahren zur Verarbeitung von Batterien, umfassend:

Kühlen und Gefrieren eines Akkus, der eine Batterie mit einer Vielzahl von Lithium-Ionen als Einzelzelle enthält, für eine Mindestkühlzeit oder länger, die der nachstehenden Gleichung 1 entspricht; und
Zerkleinern des gefrorenen Akkus.

<Gleichung 1>

$$\text{Mindestkühlzeit} = A \times W^{0.33}$$

($A = 4 \times e^{(-0.02 \times dT)}$ w = Batteriegewicht (Kg), dT= | Außenabkühltemperatur - Solltemperatur |, und | | bezeichnet einen Absolutwert)

2. Verfahren zur Verarbeitung von Batterien nach Anspruch 1, wobei:
das Gefrieren durch Abkühlen auf -150 °C bis -60 °C erfolgt.

3. Verfahren zur Verarbeitung von Batterien nach Anspruch 1, wobei:

das Gefrieren durch Abkühlen auf -60 °C bis -20 °C erfolgt, und
das Zerkleinern unter Zufuhr von Inertgas, Kohlendioxid, Stickstoff, Wasser oder Kombinationen daraus erfolgt.

4. Verfahren zur Verarbeitung von Batterien nach Anspruch 1, wobei:

das Gefrieren durch Abkühlen auf -60 °C bis -20 °C erfolgt, und
das Zerkleinern unter Vakuumbedingungen von 100 Torr oder weniger erfolgt.

5. Verfahren zur Verarbeitung von Batterien nach Anspruch 1, wobei:
das Zerkleinern so lange durchgeführt wird, bis die maximale Größe des zerdruckten Produkts 10 mm oder weniger beträgt.

6. Verfahren zur Verarbeitung von Batterien nach Anspruch 1, ferner umfassend:
Durchführen einer magnetischen Trennung oder einer Trennung nach spezifischem Gewicht nach dem Zerkleinern, um Produkte mit einer maximalen Größe von 1 mm oder weniger zu trennen.

7. Verfahren zur Verarbeitung von Batterien nach Anspruch 1, ferner umfassend:
Zusammenpressen des gefrorenen Akkus nach dem Einfrieren und vor dem Zerkleinern.

8. Verfahren zur Verarbeitung von Batterien nach Anspruch 7, wobei:
das Zusammenpressen so erfolgt, dass die Dicke des Akkus weniger als die Hälfte der Dicke des Akkus vor dem Einfrieren beträgt.

9. Verfahren zur Verarbeitung von Batterien, umfassend:

Zerkleinern eines Akkus, während der Akku, der eine Batterie mit einer Vielzahl von Lithium-Ionen als Einzelzelle enthält, für eine Mindestkühlzeit oder länger gekühlt und gefroren wird, die der nachstehenden Gleichung 1 entspricht.

<Gleichung 1>

$$\text{Mindestkühlzeit} = A \times W^{0.33}$$

$(A = 4 \times e^{(-0.02 \times dT)})$ w = Batteriegewicht(Kg), dT = | Außenabkühltemperatur - Solltemperatur |, and | | bezeichnet einen Absolutwert)

10. Verfahren zur Verarbeitung von Batterien nach Anspruch 9, wobei:
das Gefrieren durch Abkühlen auf -150 °C bis -60 °C erfolgt.

11. Verfahren zur Verarbeitung von Batterien nach Anspruch 9, wobei:

das Gefrieren durch Abkühlen auf -60 °C bis -20 °C erfolgt, und
das Zerkleinern unter Zufuhr von Inertgas, Kohlendioxid, Stickstoff, Wasser oder Kombinationen daraus erfolgt.

12. Verfahren zur Verarbeitung von Batterien nach Anspruch 9, wobei:

das Gefrieren durch Abkühlen auf -60 °C bis -20 °C erfolgt, und
das Zerkleinern unter Vakuumbedingungen von 100 Torr oder weniger erfolgt.

13. Verfahren zur Verarbeitung von Batterien nach Anspruch 9, wobei:
das Zerkleinern so lange durchgeführt wird, bis die maximale Größe des zerdruckten Produkts 10 mm oder weniger beträgt.

**14.** Verfahren zur Verarbeitung von Batterien nach Anspruch 9, das ferner umfasst:
Durchführen einer magnetischen Trennung oder einer Trennung nach spezifischem Gewicht nach dem Zerkleinern, um Produkte mit einer maximalen Größe von 1 mm oder weniger zu trennen.

**Revendications**

**1.** Procédé de traitement de batterie comprenant :

le refroidissement et la congélation d'un bloc de batterie qui inclut une batterie qui inclut une pluralité d'ions de lithium en tant que cellule unitaire pendant un temps de refroidissement minimum ou plus qui satisfait l'Équation 1 ci-dessous ; et
l'écrasement du bloc de batterie congelé.

<Équation 1>

Temps de refroidissement minimum = A x W$^{0,33}$

(A = 4 x e$^{(-0,02 \times dT)}$, W = poids de la batterie (kg), dT = |température de refroidissement externe - température cible | , et | | représente une valeur absolue)

**2.** Procédé de traitement de batterie selon la revendication 1, dans lequel :
la congélation est réalisée par refroidissement jusqu'à -150 °C à -60 °C.

**3.** Procédé de traitement de batterie selon la revendication 1, dans lequel :

la congélation est réalisée par refroidissement jusqu'à -60 °C à - 20 °C ; et
l'écrasement est réalisé sous des conditions d'alimentation en gaz inerte, en dioxyde de carbone, en azote, en eau ou en combinaisons afférentes.

**4.** Procédé de traitement de batterie selon la revendication 1, dans lequel :

la congélation est réalisée par refroidissement jusqu'à -60 °C à - 20 °C ; et
l'écrasement est réalisé sous des conditions d'atmosphère de vide de 100 Torrs ou moins.

**5.** Procédé de traitement de batterie selon la revendication 1, dans lequel :
l'écrasement est réalisé jusqu'à ce qu'une dimension maximum d'un produit écrasé soit de 10 mm ou moins.

**6.** Procédé de traitement de batterie selon la revendication 1, comprenant en outre :
la réalisation d'une séparation magnétique ou d'une séparation par gravité spécifique afin de séparer des produits qui présentent une dimension maximum de 1 mm ou moins, après l'écrasement.

**7.** Procédé de traitement de batterie selon la revendication 1, comprenant en outre :
la compression du bloc de batterie congelé, après la congélation et avant l'écrasement.

**8.** Procédé de traitement de batterie selon la revendication 7, dans lequel :
la compression est réalisée de telle sorte qu'une épaisseur du bloc de batterie soit inférieure à la moitié d'une épaisseur du bloc de batterie avant congélation.

**9.** Procédé de traitement de batterie comprenant :

l'écrasement d'un bloc de batterie, tout en refroidissant et en congelant le bloc de batterie qui inclut une batterie qui inclut une pluralité d'ions de lithium en tant que cellule unitaire pendant un temps de refroidissement minimum ou plus qui satisfait l'Équation 1 ci-dessous.

<Équation 1>

$$\text{Temps de refroidissement minimum} = A \times W^{0,33}$$

($A = 4 \times e^{(-0,02 \times dT)}$, W = poids de la batterie (kg), dT = | température de refroidissement externe - température cible |, et | | représente une valeur absolue)

**10.** Procédé de traitement de batterie selon la revendication 9, dans lequel :
la congélation est réalisée par refroidissement jusqu'à -150 °C à -60 °C.

**11.** Procédé de traitement de batterie selon la revendication 9, dans lequel :

la congélation est réalisée par refroidissement jusqu'à -60 °C à - 20 °C ; et
l'écrasement est réalisé sous des conditions d'alimentation en gaz inerte, en dioxyde de carbone, en azote, en eau ou en combinaisons afférentes.

**12.** Procédé de traitement de batterie selon la revendication 9, dans lequel :

la congélation est réalisée par refroidissement jusqu'à -60 °C à - 20 °C ; et
l'écrasement est réalisé sous des conditions d'atmosphère de vide de 100 Torrs ou moins.

**13.** Procédé de traitement de batterie selon la revendication 9, dans lequel :
l'écrasement est réalisé jusqu'à ce qu'une dimension maximum d'un produit écrasé soit de 10 mm ou moins.

**14.** Procédé de traitement de batterie selon la revendication 9, comprenant en outre :
la réalisation d'une séparation magnétique ou d'une séparation par gravité spécifique afin de séparer des produits qui présentent une dimension maximum de 1 mm ou moins, après l'écrasement.

# FIG. 1

Cell $\Longrightarrow$ Module $\Longrightarrow$ Pack

# FIG. 2

```
┌─────────────────────────────────────────────┐
│           Electrical discharge               │
└─────────────────────────────────────────────┘
                      │
                      ▼
┌─────────────────────────────────────────────┐
│  Battery disassembly (Pack→Module→Cell)      │
└─────────────────────────────────────────────┘
                      │
                      ▼
┌─────────────────────────────────────────────┐
│       Complete waterproof (salt water)       │
└─────────────────────────────────────────────┘
                      │
                      ▼
┌─────────────────────────────────────────────┐
│           Firing process (600℃)              │
└─────────────────────────────────────────────┘
                      │
                      ▼
┌─────────────────────────────────────────────┐
│     Crush and specific gravity separation    │
└─────────────────────────────────────────────┘
                      │
                      ▼
┌─────────────────────────────────────────────┐
│           Black power separation             │
└─────────────────────────────────────────────┘
```

FIG. 3

```
┌─────────────────────────────┐
│     Freeze battery pack     │
└─────────────────────────────┘
               │
               ▼
┌─────────────────────────────┐
│            Crush            │
└─────────────────────────────┘
```

FIG. 4

FIG. 5

FIG. 6

# FIG. 7

FIG. 8A

FIG. 8B

## FIG. 8C

FIG. 8D

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000106221 A
- CN 109560342 A
- JP H11167936 A